# EUROPÄISCHE PATENTSCHRIFT

(11) **EP 3 400 698 B1**
(45) Veröffentlichungstag und Bekanntmachung des Hinweises auf die Patenterteilung: **07.06.2023**
(21) Anmeldenummer: 17705324.6
(22) Anmeldetag: 08.02.2017
(51) Int. Cl.: H04L 67/02

(54) **VERFAHREN UND VORRICHTUNG ZUM DATENAUSTAUSCH**
METHOD AND DEVICE FOR DATA EXCHANGE
PROCÉDÉ ET DISPOSITIF D'ÉCHANGE DE DONNÉES

(30) Priorität: 15.03.2016 DE 102016204195
(43) Veröffentlichungstag der Anmeldung: 14.11.2018
(73) Patentinhaber: Siemens Aktiengesellschaft, 80333 München (DE)
(72) Erfinder: HUND, Johannes, 81739 München (DE)
(74) Vertreter: Siemens Patent Attorneys
(86) Internationale Anmeldenummer: PCT/EP2017/052696
(87) Internationale Veröffentlichungsnummer: WO 2017/157584

(56) Entgegenhaltungen:
- US-A1- 2007 005 768
- US-A1- 2008 034 052
- US-A1- 2010 250 696
- US-A1- 2012 054 809
- US-A1- 2013 059 527
- US-B1- 6 965 604
- US-B1- 7 401 118

## Beschreibung

Die Erfindung betrifft ein Verfahren sowie eine Vorrichtung zum Datenaustausch gemäß dem Oberbegriff der unabhängigen Patentansprüche.

Im Stand der Technik sind Übertragungsprotokolle bekannt, welche eine zustandslose Übertragung von Daten über ein Rechnernetz gewährleisten. Ein heute überwiegend eingesetztes Übertragungsprotokolle ist als »Hypertext Transfer Protocol« oder HTTP bekannt. HTTP wird heute vornehmlich zur Übertragung von Hypertext-Dokumenten im World Wide Web (WWW) eingesetzt, zunehmend aber auch zur Realisierung von Webservices für eine direkte Maschine-zu-Maschine-Interaktion.

Eine HTTP-Kommunikation zwischen zwei Kommunikationseinheiten, üblicherweise einem Client und einem Server, erfolgt mit einem Austausch von Nachrichten, welche üblicherweise eine Anfrage und eine Antwort umfassen. Auf eine Anfrage bzw. Request, welche üblicherweise von einem Client an einen Server gerichtet wird, erfolgt eine Antwort bzw. englisch Response als Reaktion auf die Anfrage.

Zur Verwirklichung einer Maschine-zu-Maschine-Interaktion unter Verwendung von HTTP hat sich ein Schema für verteilte Webservices bewährt, welches in der Fachwelt auch als »Representational State Transfer« bzw. REST bekannt ist. Wie das Übertragungsprotokoll HTTP ist auch das Schema REST zustandslos, d.h. zwischen zwei Nachrichten erfolgt keine Speicherung von Zustandsinformationen seitens der beteiligten Kommunikationspartner. Diese Zustandslosigkeit gewährleistet eine Skalierbarkeit eines Webservices. Im Zuge einer Lastverteilung können an einem Server eintreffende Anfragen ohne weiteres auf mehrere Server verteilt werden. Webservices, welche dem Schema REST entsprechen, werden auch als RESTful bezeichnet. Zur Realisierung von Webservices werden Anfrageschemata verwendet, welche im HTTP-Übertragungsprotokoll bereits definiert sind, beispielsweise die bekannten Anfrageschemata GET, POST, PUT/PATCH oder DELETE.

Während eine Nutzung von HTTP für eine Übertragung von Hypertext-Dokumenten keine besonderen Vorgaben an die Qualität des Nachrichtenaustauschs erfordert, erfordern Implementierungen von Webservices mittels nachrichtenorientierter Middleware-Applikationen eine definierte Dienstgüte oder Quality of Service (QoS). Zu dieser Dienstgüte zählen insbesondere spezifizierte Antwortzeiten oder ein geforderter Durchsatz von Nachrichten. Derlei Anforderungen an die Dienstgüte unterscheiden sich dabei in Abhängigkeit von Applikationen, welcher der nachrichtenorientierten Middleware-Applikation übergeordnet ist bzw. sich dieser bedient.

Derzeit bekannte Maßnahmen zur Gewährleistung einer zugesagten Dienstgüte umfassen eine Parametrisierung eines Datenpaketverkehrs mit einer Reservierung, Optimierung und gegebenenfalls Limitierung von Datenpaketraten. Diese Maßnahmen erfolgen allesamt auf Schicht 3 des bekannten OSI-Modells (Open Systems Interconnection Model), also der Vermittlungsschicht bzw. Network Layer, welche die Vermittlung auf Datenpaketebene betrifft.

Aus der US 2010/250696 A1 ist ein Empfangsgerät und -methode bekannt. Ein empfangendes Gerät empfängt Nachrichten, erkennt die in den Kopfzeilen der Nachrichten eingestellten Prioritätsstufen und liest die ersten und zweiten Nachrichten. Sobald die Empfangsvorrichtung den Header der zweiten Nachricht während des Lesens der ersten Nachricht empfängt, steuert sie in Übereinstimmung mit den Prioritätsstufen der ersten und zweiten Nachricht die Lesegeschwindigkeiten, mit denen die ersten und zweiten Nachrichten gelesen werden. Ein Zuordnungsdatum zur Zuordnung der Nachricht zu einer Applikation oder einer Applikationsgruppe ist nicht offenbart.

Aus der US 2007/005768 A1 ist ein Verfahren und System zum Bereitstellen eines Streaming-Dienstes in einem Heimnetzwerk bekannt. Das Verfahren umfasst das Anfordern eines Streaming-Dienstes und das Übertragen von Informationen über die Priorität der Anforderung an den Server und das Verbinden mit dem Server, der die Verbindung eines Clients, der eine niedrigere Priorität als die der übertragenen Anforderung hat, selektiv trennt, abhängig davon, ob die der angeforderte Streaming-Dienst verfügbar ist und den angeforderten Streaming-Dienst empfängt. Ein Zuordnungsdatum zur Zuordnung einer Nachricht zu einer Applikation oder einer Applikationsgruppe ist nicht offenbart.

Aus der US 2012/054809 A1 ist ein Generieren einer Antwort auf eine Anforderungsnachricht zu gewünschten Videoinhalten in Verbindung mit dynamisch verarbeiteten Videoinhalten bekannt. Ein Videoverarbeitungsserver empfängt die von einem Gateway umgeleitete Anforderungsnachricht. Die Umleitung der Anforderung durch das Gateway erfolgt basierend auf in der Anforderung enthaltenen Steuerdaten, die für eine optimale Bereitstellung des Videoinhalts verwendet werden. Das Gateway sieht vor, Quality-of-Service-Parameter auf Paketflüsse anzuwenden. Ein Zuordnungsdatum zur Zuordnung einer Nachricht zu einer Applikation oder einer Applikationsgruppe ist nicht offenbart.

Aus der US 6,965,604 B1 ist ein Verfahren und Vorrichtung zur Informationsübertragung bekannt. Zur Verwendung in einem Kommunikationsnetz wird ein verbessertes Informationsübertragungsverfahren bereitgestellt. Das Informationsübertragungsverfahren kombiniert eine Bandbreitensteuertechnik mit einer Caching-Technik, wodurch es möglich wird, die zugewiesene Bandbreite auf effiziente Weise zu verwenden. Dabei wird ein Header offenbart, der eine die Priorität der Nachricht definierende Erweiterung enthält. Der Header enthält keine Maßgabe zur Zuordnung der Nachricht zu einer Applikation oder einer Applikationsgruppe.

Aus der US 2013/0059527 A1 ist eine Weiterleitungsvorrichtung bekannt. Diese umfasst einen Empfänger, eine Informationsbeschaffungseinheit, eine Parameterspeichereinheit und eine Parametereinstelleinheit und leitet ein Paket, das von einem ersten Netz übertragen wird, an ein zweites Netz weiter. Die Informationsgewinnungseinheit erhält Datentypinformationen zum Identifizieren eines Datentyps, der vom Paket gesendet und empfangen wird. Die Parameterspeichereinheit speichert einen Steuerparameter, der zum Steuern der Kommunikationsqualität in dem zweiten Netzwerk verwendet wird, um einer Art von Übertragungsdaten zugeordnet zu werden. Die Parametereinstelleinheit stellt auf das Paket den Steuerparameter ein, der Übertragungsdaten eines gleichen Typs wie durch die Datentypinformationen identifizierte Daten zugeordnet ist. Der Steuerparameter enthält keine Daten zur Zuordnung der Nachricht zu einer Applikation oder einer Applikationsgruppe.

Aus der US 7,401,118 B1 ist ein Übertragungssystem für Web-Informationen bekannt, bei dem zwei Prioritäten, eine persönliche und eine Netzpriorität, benutzerseitig einstellbar sind. Die Netzpriorität kann von einem LAN-seitigen Proxy-Server eingestellt werden kann, wenn eine Anfrage gestellt wird. Ein providerseitig vorgesehener Proxy-Server extrahiert die Netzpriorität aus der Anfrage und wandelt sie einem Kommunikationsstatus entsprechend in eine Endpriorität um. Anschließend wird die Endpriorität als Antwort auf die Webanfrage in einen bevorzugten Steuerparameter eines IP-Pakets eines Web-Objekts umgewandelt und an den LAN-seitigen Proxy-server weitergeleitet. Keine der Prioritätsangaben enthält Daten zur Zuordnung der Nachricht zu einer Applikation oder einer Applikationsgruppe.

Aus der US 2008/0034052A1 ist eine Anwendungspriorisierung in einem zustandslosen Protokoll bekannt. Dabei wird es einer Anwendung ermöglicht, ihren Datenverkehr auf anwendungsspezifische Weise zu priorisieren, sodass der für diese Anwendung wichtigste Datenverkehr priorisiert werden kann. Die Anwendung übermittelt hierzu relative Prioritätsinformationen für ihren Datenverkehr an einen Web-Proxy oder Edge-Server, welcher gespeicherte Richtlinieninformationen abruft, um zu bestimmen, wie der Datenverkehr im Netzwerk priorisiert werden soll. Der Web-Proxy stellt außerdem sicher, dass die Nutzung der Netzwerkressourcen auf mehrere Anwendungen verteilt ist. Cookies werden verwendet, um auf effiziente Weise Prioritätsinformationen zwischen dem Edge-Server und der Anwendung zu übertragen.

Maßnahmen zur Gewährleistung einer Dienstgüte auf der Vermittlungsschicht sind indes für nachrichtenorientierte Middleware-Applikationen auf Basis von HTTP nicht geeignet, da erstere nur eine Weiterleitung von Datenpaketen auf Schicht 3 des OSI-Modells steuern, während letztere einen übergeordneten Nachrichtenaustausch auf einer Übertragungs- und/oder Applikationsschicht regeln sollen. Auf der übergeordneten Ebene der Übertragungs- und/oder Applikationsschicht sind datenpaketorientierte Dienstgüteattribute aus der Vermittlungsschicht nicht mehr zugreifbar und blieben ohnehin, etwa bei einer Vermittlung über mehrere Netzwerksegmentgrenzen hinweg, nicht invariabel, da datenpaketorientierte Attribute während der Weiterleitung von Datenpaketen in einzelnen Netzknoten jederzeit geändert werden können. Maßnahmen zur Gewährleistung einer Dienstgüte bei einem Datenaustausch zwischen einem Sender und Empfänger auf Übertragungs- und/oder Applikationsschicht sind daher mit bekannten Vorgehensweisen zur Gewährleistung einer Dienstgüte auf der Vermittlungsschicht nicht zu bewerkstelligen.

Der Erfindung liegt die Aufgabe zugrunde, Mittel anzugeben, welche eine Einstellung einer Dienstgüte für ein zustandslosen Übertragungsprotokolls auf einer Übertragungs- und/oder Applikationsschicht gestatten.

Die Aufgabe wird erfindungsgemäß durch ein Verfahren mit den Merkmalen des Patentanspruchs 1 gelöst.

Beim erfindungsgemäßen Verfahren zum Datenaustausch ist nach Aufbau einer Datenverbindung über mindestens einen Netzknoten ein Datenaustausch über eine Mehrzahl von Nachrichten gemäß einem zustandslosen Übertragungsprotokoll vorgesehen. Eine Nachricht beinhaltet neben den eigentlich auszutauschenden Daten - auch Nutzdaten oder »Payload« genannt - einen Nachrichtenkopf bzw. »Message Header«. Der Nachrichtenkopf enthält ein oder mehrere Headerfelder welche u.a. eine Charakterisierung eines Typs und/oder eines Inhalts der Nachricht enthalten. Die Nachricht umfasst eine von einem Client an einen Server gesendete Anfrage.

Erfindungsgemäß ist eine Erweiterung des Nachrichtenkopfs um ein oder mehrere Dienstgüteattribute vorgesehen, welche von zumindest einem am Datenaustausch beteiligten Netzknoten zur Bestimmung einer Handhabung einer jeweiligen Nachricht, insbesondere gegenüber anderen Nachrichten, herangezogen wird. Das mindestens eine Dienstgüteattribut umfasst ein Zuordnungsdatum zur Zuordnung der Nachricht zu einer Applikation oder einer Applikationsgruppe.

Bei einer Handhabung einer am Datenaustausch zwischen dem jeweiligen Empfänger und dem jeweiligen Sender (und eventuell mehrerer weiterleitender Server) beteiligten Netzknoten wird der Nachrichtenkopf der Nachricht ausgewertet. Die erfindungsgemäße Vorsehung der Dienstgüteattribute in diesem Bereich hat den Vorteil, dass eine Auswertung der Nutzdaten der Nachricht nicht erforderlich ist. Überlegungen, statt dessen eine sogenannte Deep Inspection, also eine Analyse der gesamten Inhalte im Payload einer Nachricht vorzunehmen, würden gegenüber der erfindungsgemäßen Maßnahme einen erheblichen Mehraufwand bedeuten.

Die Dienstgüteattribute können in vorteilhafter Weise von den am Datenaustausch beteiligten Netzknoten, also Client, Server, und weiterleitende Netzknoten (»Intermediaries«) zur Bestimmung einer Handhabung einer jeweiligen Nachricht herangezogen werden, beispielsweise auch zur Bestimmung einer Handhabung einer jeweiligen Nachricht gegenüber anderen Nachrichten, etwa im Sinne einer Priorisierung.

Eine »Handhabung« der Nachrichten kann dabei je nach Einsatzzweck folgende Ausprägungen einnehmen:
- Ein Einordnen der Nachrichten in ein Warteschleifenverfahren bzw. Queueing, also beispielsweise in welcher Reihenfolge ausgehende Nachrichten zum Empfänger gesendet werden;
- eine Pufferung bzw. Buffering, also in welcher Reihenfolge eingehende Nachrichten verarbeitet werden; und/oder;
- eine Weiterleitungsregel bzw. Routing, also wohin und ob Nachrichten weitergeleitet werden.

Die Aufgabe wird erfindungsgemäß weiterhin durch ein Computerprogrammprodukt mit Mitteln zur Durchführung des Verfahrens sowie durch einen Netzknoten zur Durchführung des Verfahrens gelöst.

Weitere vorteilhafte Ausgestaltungen der Erfindung sind Gegenstand der abhängigen Ansprüche.

Gemäß einer Ausgestaltung der Erfindung umfasst ein Dienstgüteattribut:
- eine Gültigkeitsdauer der Nachricht zur Bestimmung einer Übermittlungszeit, nachdem die Nachricht irrelevant ist und/oder;
- einen Prioritätswert zu Priorisierung der Nachricht auf einer Übertragungs- und/oder Applikationsschicht.

Insbesondere die Zuordnung der Nachricht zu einer Applikation oder einer Applikationsgruppe erweist sich als vorteilhaft, da im Fall einer Nutzung eines HTTP-Kanals für verschiedene Applikationen verschiedene Dienstgütevorgaben bzw. Constraints z.B. bezüglich Antwortzeiten, Durchsatz usw. vorgegeben werden können, die sehr applikationsspezifisch sind. Auch können Applikationen untereinander verschiedene Wichtigkeiten für das Gesamtsystem aufweisen. Die über die Dienstgüteattribute bewirkten Dienstgüteeinstellungen können bei Bedarf auch an tiefere Applikationsschichten weitergereicht werden. Besonders bei Lastsituationen im Netzwerk können so bessere Dienstgüteergebnisse erzielt werden.

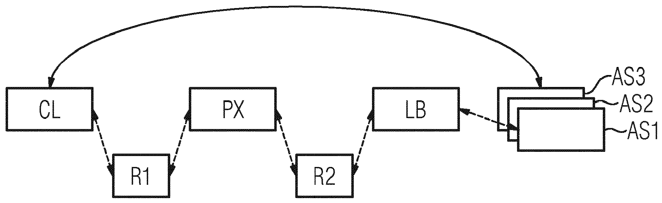

Im Folgenden werden weitere Ausführungsbeispiele und Vorteile der Erfindung anhand der Zeichnung näher erläutert. Dabei zeigt die einzige Figur eine schematische Darstellung eines Datenaustauschs über mehrere Netzknoten zwischen einem Client und eine oder mehreren Servern.

Die Figur zeigt eine schematische Darstellung eines Datenaustauschs zwischen einem Client CL über mehrere Netzknoten R1, PX, R2, LB mit einer Mehrzahl von Servern AS1, AS2, AS3. Zwischen den Kommunikationspartnern, also dem Client CL und einem der Server AS1,AS2,AS3, welche fallweise und vorübergehend als Sender und/oder Empfänger agieren, sind mehrere Netzknoten R1,PX,R2,LB, hier exemplarisch ein erster Router R1, ein Proxy PX ein zweiter Router R2 sowie ein Load Balancer LB am Datenaustausch zwischen dem Client CL und einem der Server AS1,AS2,AS3 beteiligt.

Im Folgenden soll ein Verfahren zum Datenaustausch auf einer Übertragungs- und/oder Applikationsschicht unter Anwendung eines zustandslosen Übertragungsprotokolls, insbesondere HTTP, betrachtet werden, bei dem, nach Aufbau einer für einen definierbaren Zeitraum persistenten Datenverbindung - beispielsweise unter Anwendung des paketvermittelnden Transportprotokolls TCP (Transmission Control Protocol) - über mindestens einen Netzknoten R1,PX,R2,LB ein Datenaustausch mittels einer oder mehrerer Nachrichten erfolgt.

Im Unterschied zu einer paketorientierten Datenübertragung - in der Zeichnung durch gestrichelte Doppelpfeile zwischen den einzelnen Netzknoten dargestellt - auf der Vermittlungsschicht bzw. Network Layer, wird der Datenaustausch auf der Übertragungs- und/oder Applikationsschicht lediglich zwischen dem Client CL und einem der Server AS1,AS2,AS3 ausgebildet.

Der letztgenannte Datenaustausch auf der Übertragungs- und/ oder Applikationsschicht ist in der Zeichnung durch einen bogenförmigen Doppelpfeil zwischen dem Client CL und einem der Server AS1, AS2, AS3 dargestellt.

Nach einem erfolgreichen Aufbau der für einen definierbaren Zeitraum persistenten datenpaktorientierten Datenverbindung über die dazwischenliegenden »Intermediaries« R1,PX,R2,LB erfolgt der weitere Datenaustausch - in der Zeichnung durch einen bogenförmigen Doppelpfeil zwischen dem Client CL und einem der Server AS1,AS2,AS3 dargestellt - als direkte Endezu-Ende-Kommunikation.

Im Folgenden wird ein exemplarischer Aufbau einer Anfrage eines Clients CL an einen jeweiligen Server AS1, AS2, AS3 näher betrachtet. Diese Anfrage weise folgende Struktur auf:
GET / HTTP/1.1
Host: siemens.com
Connection: close
User-Agent: Mozilla/5.0
Accept-Encoding: gzip

Die erste Zeile bzw. Headerfeld
GET / HTTP/1.1
umfasst eine Anweisung einer Methode »GET« und spezifiziert das Protokoll der HTTP-Nachricht als HTTP-Nachricht in der Version 1.1 gemäß Spezifikation RFC 2616 (»Requests for Comments«) der Internet Engineering Task Force (IETF) bzw. der Internet Society.

Die nächste Zeile
Host: siemens.com
gibt einen Domain-Name angefragten Servers AS1 an.

Die Zeile
Connection: close gibt an, welche Datenverbindung der Client bevorzugt, hier eine Datenverbindung bzw. TCP- Datenverbindung, welche nach Abschluss der Antwort geschlossen wird.

Die Zeile
User-Agent: Mozilla/5.0
spezifiziert eine Applikation auf Seiten des Clients, hier eine Applikation Mozilla in der Version 5.0

Die Zeile
Accept-Encoding: gzip
gibt an, welche komprimierten Formate der Client unterstützt, hier das Kompressionsformat gzip.

Eine diese Anfrage beantwortende Antwort seitens des angefragten Servers AS1 weise dann folgende beispielhafte Struktur auf:
HTTP/1.1 200 OK
Content-Length: 123456
Content-Language: de
Connection: close
Content-Type: text/html
<html>...</html>

In der ersten Zeile bzw. Headerfeld
HTTP/1.1 200 OK
wird neben der Spezifizierung als HTTP-Nachricht in der Version 1.1. eine erfolgreiche Ausführung der Anfrage mittels der Bestätigung »200 OK« zurückgemeldet.

In den folgenden Zeilen
Content-Length: 123456
Content-Language: de
werden die Länge (123456 Bytes) und die Sprache (Deutsch) des Contents bzw. Nutzdatenteils der Nachricht spezifiziert.

Die Zeile
Connection: close gibt an, welche Datenverbindung der Server AS1 bevorzugt, hier eine Datenverbindung bzw. TCP-Datenverbindung, welche nach Abschluss der Antwort geschlossen wird.

Die Zeile
Content-Type: text/html
klassifiziert die Daten im Nutzdatenteil der Nachricht
<html>...</html>
als Text im Format HTML.

Erfindungsgemäß werden die oben gezeigte Anfrage bzw. Antwort in ihren jeweiligen Nachrichtenköpfen nun mit mindestens einem Dienstgüteattribut versehen, welche dem Server AS1 sowie dem Client CL eine Klassifikation ermöglichen, welche Nachricht welche Voraussetzungen bezüglich ihrer Dienstgüte hat. Die gemäß einer Ausgestaltung der Erfindung erweiterte Anfrage weist folgende exemplarische Struktur auf:
GET / HTTP/1.1
Host: siemens.com
Connection: close
User-Agent: Mozilla/5.0
Accept-Encoding: gzip
X-Priority: high
X-TTL: 20s

In dieser Ausgestaltung der Anfrage sind zwei Dienstgüte- bzw. QoS-Attribute (Quality of Service), nämlich »X-Priority« und »X-TTL« vorgesehen. Der Wert des Dienstgüteattributs »X-Priority« gibt dem angesprochenen Server AS1 sowie den am Datenaustausch beteiligten Netzknoten R1,PX,R2,LB eine Prioritätshöhe für die Weiterleitung und Bearbeitung der Anfrage vor, oder im Allgemeinen, ein Maß zur Handhabung dieser Anfrage, insbesondere gegenüber anderen Nachrichten mit geringerer Priorität. Die Priorität der Anfrage ist im obigen Beispiel mit der Anweisung
X-Priority: high
auf »hoch« gesetzt.

Der Wert des Dienstgüteattributs »X-TTL« (Time to Live bzw. Überlebenszeit) gibt dem angesprochenen Server AS1 sowie den am Datenaustausch beteiligten Netzknoten R1,PX,R2,LB eine Anforderungen an die Übermittlungszeit vor, nachdem die Nachricht irrelevant ist, oder im Allgemeinen, ein Zeitmaß zur Handhabung der Nachricht. Die Überlebenszeit der Anfrage ist im obigen Beispiel mit der Anweisung
X-TTL: 20s
auf 20 Sekunden gesetzt.

Gemäß einer Ausgestaltung der Erfindung wird in einem Dienstgüteattribut »X-EOL« (End-of-Life) statt einer Überlebenszeit ein Gültigkeitsende, also ein Zeitpunkt, ab dem die Nachricht irrelevant ist, angegeben. Diese Maßnahme ist insbesondere vorteilhaft, falls zu erwarten ist, dass zumindest einer der am Datenaustausch beteiligten Netzknoten R1, PX, R2, LB oder auch der Client CL keine Berechnung der Endzeit durchzuführen vermögen. Dies ermöglicht den am Datenaustausch beteiligten Netzknoten R1,PX,R2,LB eine direkte Angabe, wann die Nachricht als irrelevant anzusehen ist, ohne dies aus der eigenen internen Zeit, dem Absendezeitpunkt und der Überlebenszeit berechnen zu müssen. Umgekehrt kann der Absendezeitpunkt aus einer Differenz des Gültigkeitsendes X-EOL und der Überlebenszeit X-TTL berechnet werden.

Die gemäß einer Ausgestaltung der Erfindung erweiterte Antwort seitens des Servers AS1 weist folgende exemplarische Struktur auf:
HTTP/1.1 200 OK
Content-Length: 123456
Content-Language: de
X-Priority: high
X-TTL: 18s
Connection: close
Content-Type: text/html
<html>...</html>

Die Priorität der beantwortenden Nachricht im obigen Beispiel ist ebenfalls auf »hoch« gesetzt, die Überlebenszeit ist auf 18 Sekunden gesetzt.

Das erfindungsgemäße Verfahren zum Datenaustausch unter Anwendung eines zustandslosen Übertragungsprotokoll, insbesondere HTTP, sieht eine Erweiterung eines Nachrichtenkopfs der Nachricht um ein oder mehrere Dienstgüteattribute vor, welche von am Datenaustausch beteiligten Netzknoten zur Bestimmung einer Handhabung einer jeweiligen Nachricht nach Vorgaben des Dienstgüteattributs vorsieht. Damit lässt sich eine Dienstgüte bzw. Quality of Service auf einer Übertragungs- und/oder Applikationsschicht verwirklichen.

Die Implementierung einer Dienstgüte auf Applikationsschicht gewährleistet bei einer Datenübertragung einer Mehrzahl unterschiedlicher Applikationen zugeordneten Nachrichten eine Annotation jeder einzelnen Nachricht bezüglich ihrer Eigenschaften und Erwartungshaltungen. Damit kann seitens der Endpunkte eine detailliertere Steuerung des Datenaustauschs bewirkt werden. Die über die Dienstgüteattribute bewirkten Dienstgüteeinstellungen können bei Bedarf auch an tiefere Applikationsschichten weitergereicht werden. Besonders bei Lastsituationen im Netzwerk können so bessere Dienstgüteergebnisse erzielt werden.

## Patentansprüche

1. Verfahren zum Datenaustausch zwischen einem Client und einem Server, bei dem nach Aufbau einer Datenverbindung über mindestens einen Netzknoten der Datenaustausch mittels mindestens einer Nachricht gemäß einem zustandslosen Übertragungsprotokoll erfolgt;
wobei die Nachricht neben auszutauschenden Daten einen Nachrichtenkopf beinhaltet, in dem eine Charakterisierung eines Typs und eines Inhalts der Nachricht enthalten sind;
wobei die Nachricht eine Anfrage umfasst, die vom Client (CL) an einen jeweiligen Server (AS1,AS2,AS3) gesendet wird; wobei im Nachrichtenkopf der Anfrage mindestens ein Dienstgüteattribut vorgesehen ist;
wobei das mindestens eine Dienstgüteattribut von zumindest einem am Datenaustausch beteiligten Netzknoten zur Bestimmung einer Handhabung einer jeweiligen Nachricht, insbesondere gegenüber anderen Nachrichten, herangezogen wird; und;
wobei das Dienstgüteattribut ein Zuordnungsdatum zur Zuordnung der Nachricht zu einer Applikation oder einer Applikationsgruppe umfasst.

2. Verfahren gemäß Patentanspruch 1,
**dadurch gekennzeichnet, dass** das zustandslose Übertragungsprotokoll gemäß dem Hypertext Transfer Protocol, http, ausgestaltet ist.

3. Verfahren gemäß einem der vorgenannten Patentansprüche, **dadurch gekennzeichnet, dass** das Dienstgüteattribut auf einer Übertragungs- und/oder Applikationsschicht des zumindest einem am Datenaustausch beteiligten Netzknoten ausgewertet wird.

4. Verfahren gemäß einem der vorgenannten Patentansprüche, **dadurch gekennzeichnet, dass** das Dienstgüteattribut
- eine Gültigkeitsdauer der Nachricht zur Bestimmung einer Übermittlungszeit, nachdem die Nachricht irrelevant ist;
- einen Zeitpunkt, zu dem die Nachricht irrelevant ist; und/oder
- einen Prioritätswert zu Priorisierung der Nachricht auf einer Übertragungs- und/oder Applikationsschicht umfasst.

5. Computerprogrammprodukt mit Mitteln zur Durchführung des Verfahrens nach einem der vorhergehenden Ansprüche, wenn das Computerprogrammprodukt an einem Netzknoten zur Ausführung gebracht wird.

6. Netzknoten zur Durchführung eines Datenaustauschs zwischen einem Client und einem Server,
mit einem Datenverbindungsmodul zum Aufbau einer Datenverbindung;
mit einem Austauschmodul zum Austausch von Nachrichten gemäß einem zustandslosen Übertragungsprotokoll über die Datenverbindung und zur Bearbeitung einer in einem Nachrichtenkopf der Nachricht beinhalteten Charakterisierung eines Typs und eines Inhalts der Nachricht;
wobei die Nachricht eine Anfrage umfasst, die vom Client (CL) an einen jeweiligen Server (AS1,AS2,AS3) gesendet wird; wobei das Austauschmodul eingerichtet ist zur Bearbeitung mindestens eines Dienstgüteattribut im Nachrichtenkopf der Anfrage; und;
wobei das Handhabungsmodul eingerichtet ist zur Handhabung, insbesondere gegenüber anderen Nachrichten, einer jeweiligen Nachricht unter Heranziehung des Dienstgüteattributs;
wobei das Dienstgüteattribut ein Zuordnungsdatum zur Zuordnung der Nachricht zu einer Applikation oder einer Applikationsgruppe umfasst.

## Claims

1. Method for data interchange between a client and a server, in which setup of a data connection via at least one network node is followed by the data interchange being effected by means of at least one message according to a stateless transmission protocol;
wherein the message contains not only data to be interchanged but also a message header including a characterization of a type and content of the message; wherein the message comprises a request sent by the client (CL) to a respective server (AS1,AS2,AS3);
wherein at least one quality of service attribute is provided in the message header of the request;
wherein the at least one quality of service attribute is used by at least one network node involved in the data interchange to determine a handling of a respective message, in particular in comparison with other messages; and
wherein the quality of service attribute comprises an association datum for associating the message with an application or a group of applications.

2. Method according to Patent Claim 1,
**characterized in that** the stateless transmission protocol is configured according to the hypertext transfer protocol, http.

3. Method according to either of the preceding patent claims, **characterized in that** the quality of service attribute is evaluated on a transmission and/or application layer of the at least one network node involved in the data interchange.

4. Method according to one of the preceding patent claims, **characterized in that** the quality of service attribute comprises
- a validity period for the message for determining a transfer time after which the message is irrelevant;
- a time at which the message is irrelevant; and/or
- a priority value for prioritizing the message on a transmission and/or application layer.

5. Computer program product having means for performing the method according to one of the preceding claims when the computer program product is executed at a network node.

6. Network node for performing a data interchange between a client and a server,
having a data connection module for setting up a data connection;
having an interchange module for interchanging messages according to a stateless transmission protocol via the data connection and for processing a characterization of a type and content of the message, which characterization is contained in a message header of the message;
wherein the message comprises a request sent by the client (CL) to a respective server (AS1,AS2,AS3);
wherein the interchange module is set up to process at least one quality of service attribute in the message header of the request; and
wherein the handling module is set up to handle, in particular in comparison with other messages, a respective message using the quality of service attribute;
wherein the quality of service attribute comprises an association datum for associating the message with an application or a group of applications.

## Revendications

1. Procédé d'échange de données entre un client et un serveur, dans lequel après établissement d'une liaison de données par au moins un noeud de réseau, l'échange de données se produit au moyen d'au moins un message selon un protocole de transmission sans statut ;
dans lequel le message contient, outre des données à échanger, un en-tête de message dans lequel est contenue une caractérisation d'un type et d'un contenu du message ;
dans lequel le message comprend une demande qui est envoyée du client (CL) à un serveur respectif (AS1, AS2, AS3) ;
dans lequel est prévu au moins un attribut de qualité de service dans l'en-tête de la demande ;
dans lequel le au moins un attribut de qualité de service est utilisé par au moins un noeud de réseau participant à l'échange de données pour déterminer une manipulation d'un message respectif, plus particulièrement par rapport à d'autres messages ; et ;
dans lequel l'attribut de qualité de service comprend une date d'affectation pour affecter le message à une application ou à un groupe d'applications.

2. Procédé selon la revendication 1, **caractérisé en ce que** le protocole de transmission sans statut est configuré selon le Hypertex Transfer Protocol, http.

3. Procédé selon l'une des revendications précédentes, **caractérisé en ce que** l'attribut de qualité de service est évalué sur une couche de transmission et/ou d'application du au moins un noeud de réseau participant à l'échange de données.

4. Procédé selon l'une des revendications précédentes, **caractérisé en ce que** l'attribut de qualité de service comprend
- une durée de validité du message pour déterminer un temps de transmission après que le message est non pertinent ;
- un moment auquel le message est non pertinent; et/ou
- une valeur de priorité pour la priorisation du message sur une couche de transmission et/ou d'application.

5. Produit de programme informatique comportant des moyens d'exécution du procédé selon l'une des revendications précédentes, lorsque le produit de programme informatique est mis en oeuvre à un noeud de réseau.

6. Noeud de réseau pour l'exécution d'un échange de données entre un client et un serveur, avec un module de liaison de données pour l'établissement d'une liaison de données ;
avec un module d'échange pour l'échange de messages selon un protocole de transmission sans statut par la liaison de données et pour le traitement d'une caractérisation, contenue dans un en-tête du message, d'un type et d'un contenu du message ;
dans lequel le message comprend une demande qui est envoyée par le client (CL) à un serveur respectif (AS1, AS2, AS3) ;
dans lequel le module d'échange est établi pour traiter au moins un attribut de qualité de service dans l'en-tête de la demande ; et ;
dans lequel le module de manipulation est établi pour manipuler, plus particulièrement par rapport à d'autres messages, un message respectif en utilisant l'attribut de qualité de service ;
dans lequel l'attribut de qualité de service comprend une date d'affectation pour l'affectation du message à une application ou un groupe d'applications.
